# EUROPÄISCHE PATENTSCHRIFT

(11) **EP 1 694 994 B1**
(45) Veröffentlichungstag und Bekanntmachung des Hinweises auf die Patenterteilung: **10.11.2010**
(21) Anmeldenummer: 04803450.8
(22) Anmeldetag: 02.12.2004
(51) Int. Cl.: F16K 31/06

(54) **VENTIL**
VALVE
SOUPAPE

(30) Priorität: 19.12.2003 DE 10359852
(43) Veröffentlichungstag der Anmeldung: 30.08.2006
(73) Patentinhaber: Neuhaus, Dietmar, Dr., 40591 Düsseldorf (DE)
(72) Erfinder: Neuhaus, Dietmar, Dr., 40591 Düsseldorf (DE)
(74) Vertreter: von Kreisler Selting Werner
(86) Internationale Anmeldenummer: PCT/EP2004/013711
(87) Internationale Veröffentlichungsnummer: WO 2005/064215

(56) Entgegenhaltungen:
- DE-C1- 19 922 414
- US-A- 3 543 797
- US-A- 4 682 508
- US-A- 5 322 260

## Beschreibung

Die Erfindung betrifft ein Ventil für Fluide mit einer Ventilkammer, die mit einem Ventileingang und einem Ventilausgang verbunden ist und durch einen Ventilsitz und eine Gegenwand begrenzt wird, und mit einem in der Ventilkammer enthaltenen bewegbaren Verschlusskörper.

Ein magnetisch betätigbares Ventil dieser Art ist in DE 199 22 414 C1 der Anmelderin beschrieben. Dieses Ventil enthält einen Verschlusskörper in Form einer Kugel, welche durch Magnetfelderregung von dem Ventilsitz entfernt wird, um das Ventil zu öffnen. Bei Beendigung der Erregung wird der Verschlusskörper allein durch die die Ventilkammer durchfließende Strömung auf den Ventilsitz zurückbewegt, um das Ventil zu schließen. Das Ventil schließt nur, wenn die Druckdifferenz zwischen Eingang und Ausgang so groß ist, dass die dadurch hervorgerufene Strömung den Verschlusskörper in Richtung auf den Ventilsitz bewegt. Dies bedeutet, dass zwischen Ventileingang und Ventilausgang eine hinreichend große Druckdifferenz vorhanden sein muss, damit das Ventil ordnungsgemäß arbeitet.

Ein ähnliches Ventil ist in DE 198 00 257 C1 der Anmelderin beschrieben. Auch hier erfordert das Zurücksetzen des Verschlusskörpers in die Schließposition eine Fluidströmung.

Ein Ventil, von dem der Oberbegriff des Patentanspruchs 1 ausgeht, ist beschrieben in DE 44 18 129 A1. Dieses Ventil weist eine an einem Kolben befestigte Kugel auf. Der Kolben wird von einer Feder gegen einen kegelstumpfförmigen Ventilsitz gedrückt, wobei die Kugel die Eingangsöffnung des Ventils verschließt. Eine Magnetspule umgibt einen Teil des Kolbens, um im Erregungszustand den Kolben zusammen mit der Kugel axial zu verschieben und dadurch die Einlassöffnung freizugeben. Der Kolben ist koaxial zu der Magnetanordnung in einem entsprechenden Zylinder angeordnet, so dass die Kugel nur axial zum Ventilsitz bewegt werden kann.

In DE 20 15 703 U1 ist eine Vorrichtung zum Prüfen der Dichtheit von Ventilen beschrieben, die eine Membranpumpe aufweist. Die Membran ist mit einem Ansatz versehen, welcher einen Ventilkörper bildet, der von einem Magnetanker gegen einen Ventilsitz gedrückt wird. Sowohl der Magnetanker als auch der Ventilsitz sind koaxial zu einer Magnetspule angeordnet, die den Magnetanker bewegt.

Der Erfindung liegt die Aufgabe zugrunde, ein Ventil zu schaffen, das mit einer geringen Bewegung schnell öffnet, wobei sichergestellt ist, dass das Ventil auch bei einer geringen Druckdifferenz zwischen Ventileingang und Ventilausgang sicher schließt.

Das erfindungsgemäße Ventil ist durch den Patentanspruch 1 definiert. Hiernach ist vorgesehen, dass der Verschlusskörper separat von der Gegenwand bewegbar ist und dass der Durchmesser des Verschlusskörpers deutlich kleiner ist als der Durchmesser der Ventilkammer, so dass der Verschlusskörper sich seitlich in der Ventilkammer bewegen kann.

Der Ventilkörper, auf den die magnetische Vorrichtung direkt einwirkt, kann sich also in der Ventilkammer seitlich bewegen, so dass eine geringe Bewegung bereits ausreicht, um einen großen Strömungsquerschnitt schnell freizugeben. Wenn der Ventilkörper eine Kugel ist, kann diese auf einem trichterförmigen Zentriersitz, welcher dem Ventilsitz gegenüberliegt, abrollen.

Die Ventilkammer ist also in der Länge veränderbar und eine Andrückvorrichtung bewirkt, dass die Ventilkammer in Richtung auf die kürzeste Länge vorgespannt ist, wobei der Verschlusskörper zwischen dem Ventilsitz und der Gegenwand eingeklemmt wird, so dass er von der Gegenwand gegen den Ventilsitz gedrückt wird. Erhöht sich der Druck am Ventileingang, so wird die Kraft der Andrückvorrichtung überwunden, und die Länge der Ventilkammer vergrößert sich dadurch, dass der Ventilsitz (oder die Gegenwand) gegen die Kraft der Andrückvorrichtung zurückweicht. Der Verschlusskörper bleibt dann auf dem Ventilsitz, wobei er sich jedoch von der Gegenwand entfernt.

Das erfindungsgemäße Ventil nimmt somit auch bei geringsten Druckdifferenzen schnell die Schließstellung ein, wenn die externe Erregung, die die Einnahme des Öffnungszustandes veranlasst hat, beendet ist.

Grundsätzlich besteht die Möglichkeit, den Ventilsitz zusammen mit der Gegenwand verschiebbar zu machen. Alternativ hierzu kann aber auch nur der Ventilsitz oder nur die Gegenwand verschiebbar sein. Wichtig ist nur, dass die Länge der Ventilkammer senkrecht zur Ebene des Ventilsitzes veränderbar ist, wobei eine Spannkraft in Richtung auf eine Verkleinerung der Länge wirkt.

Bei einer bevorzugten Ausführungsform der Erfindung weist die Gegenwand einen Zentriersitz auf, der den Verschlusskörper abstützt. Der Zentriersitz ist auf die Achse des Ventilsitzes ausgerichtet und bewirkt, dass der Verschlusskörper auf diese Achse ausgerichtet wird, um den Ventilsitz exakt zu treffen und auszufüllen.

Vorzugsweise ist der Verschlusskörper eine Kugel und der Zentriersitz weist einen Trichter auf.

Das Ventil kann als Einzelventil oder auch als Mehrfachventil ausgebildet werden. Bei einem Mehrfachventil können Sitze mehrerer Ventilkammern an einem gemeinsam bewegbaren Kolben angeordnet sein. Hierbei schließen alle Ventile gleichzeitig durch die Bewegung des Kolbens.

Im Folgenden werden unter Bezugnahme auf die Zeichnungen Ausführungsbeispiele der Erfindung näher erläutert. Es sei darauf hingewiesen, dass der Schutzbereich der Erfindung nicht auf die dargestellten Ausführungsbeispiele beschränkt ist. Vielmehr wird er durch die Patentansprüche und deren Äquivalente bestimmt.

Es zeigen:
- Fig. 1:: Einen Längsschnitt durch eine erste Ausführungsform des Ventils im Schließzustand bei geringer Druckdifferenz zwischen Ventileingang und Ventilausgang,
- Fig. 2:: das Ventil von Fig. 1 bei höherer Druckdifferenz im Schließzustand,
- Fig. 3:: das Ventil von Fig. 1 im Öffnungszustand und
- Fig. 4:: eine zweite Ausführungsform des Ventils, das hier als Mehrfachventil ausgebildet ist.

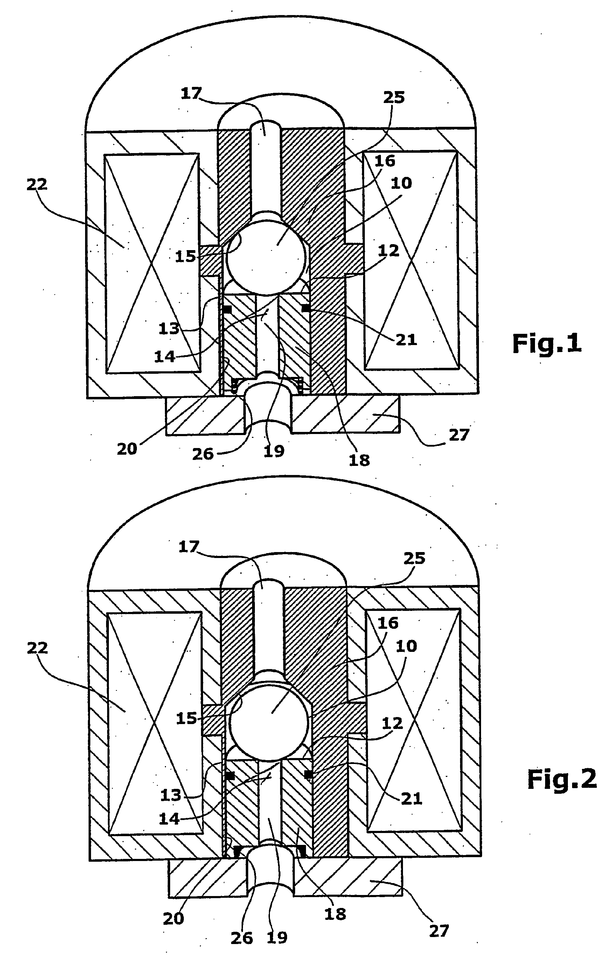

Das in den Fig. 1-3 dargestellte Ventil ist ein magnetisch betätigbares Ventil. Das Ventil weist eine Ventilkammer 10 auf, die generell zylindrisch ausgebildet ist und an einem Ende durch eine Gegenwand 16 und am entgegengesetzten Ende durch eine Ventilsitzwand 12 begrenzt wird. Die Umfangswand 13 besteht aus einer zylindrischen Hülse. In der Ventilsitzwand 12 befindet sich ein Ventilsitz 14 in Form einer runden Öffnung.

In der Gegenwand 16 befindet sich ein trichterförmiger Zentriersitz 15, der koaxial zu dem Ventilsitz 14 ausgerichtet ist. Durch die Gegenwand 16 geht eine Bohrung hindurch, welche den Ventileingang 17 bildet.

Die Ventilsitzwand 12 und der Ventilsitz 14 sind Bestandteil eines Kolbens 18, durch den sich eine Bohrung erstreckt, die den Ventilausgang 19 bildet. Der Kolben 18 ist in einem Zylinder 20 abdichtend geführt, wobei die Abdichtung durch eine Ringdichtung 21 bewirkt wird. Die Gegenwand 16 ist einstückig mit der Wand des Zylinders 20 ausgebildet. Er ist von einem toroidförmigen Spulenkörper umgeben, welcher eine elektromagnetische Vorrichtung 22 enthält, die ein Magnetfeld zum Bewegen des Verschlusskörpers 25 erzeugt, welcher in der Ventilkammer 10 angeordnet ist. Der Verschlusskörper 25 ist eine Kugel aus ferromagnetischem Material. Der Durchmesser der Kugel ist deutlich kleiner als der Durchmesser der Ventilkammer 10, so dass die Kugel sich seitlich in der Ventilkammer bewegen kann.

Die Gegenwand 16 ist bei diesem Ausführungsbeispiel fest in der magnetischen Vorrichtung angeordnet, während der Kolben 18 axial zum Ventilsitz 14 bewegbar ist. Der Kolben 18 ist durch eine Andrückvorrichtung 26, die hier als Druckfeder ausgebildet ist, in Richtung auf die Gegenwand 16 vorgespannt. Die Andrückvorrichtung 26 stützt sich an einem mit der magnetischen Vorrichtung verbundenen Flansch 27 ab.

Im drucklosen Zustand gemäß Fig. 1 wird der Kolben 18 von der Andrückvorrichtung 26 gegen die Gegenwand 16 verschoben. Dadurch wird der Verschlusskörper 25 gegen den Zentriersitz 15 gedrückt und von diesem zentriert. Damit ist sichergestellt, dass der Verschlusskörper den Ventilsitz 14 exakt verschließt.

Die gemeinsame Achse von Ventilsitz 14 und Zentriersitz 15 ist exzentrisch zu der Achse des Zylinders 20 bzw. der magnetischen Vorrichtung 22.

Fig. 2 zeigt das Ventil mit einer Druckdifferenz zwischen Ventileingang 17 und Ventilausgang 19, die ausreichend ist, den Kolben 18 gegen die Kraft der Andrückvorrichtung 26 von der Gegenwand 16 wegzubewegen. Die Andrückvorrichtung 26 ist zusammengedrückt und der Verschlusskörper 25 kann durch die Wirkung des Magnetfeldes vom Ventilsitz 14 gerollt werden.

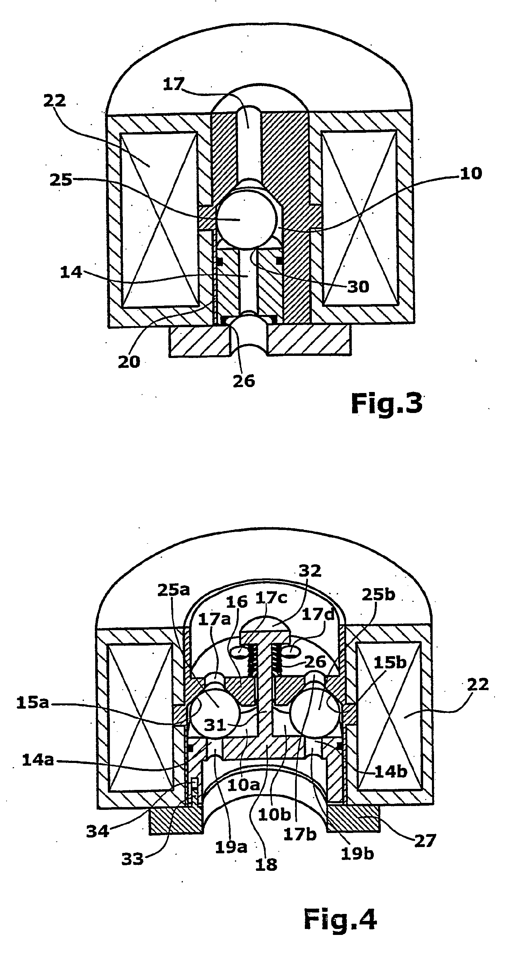

In Fig. 3 ist das Ventil im geöffneten Zustand dargestellt. Ein Magnetfeld hat den magnetischen Verschlusskörper 25 seitlich vom Ventilsitz 14 gerollt und seitlich gegen die Wand des Zylinders 20 gedrückt, so dass die Kugel nicht mehr voll auf dem Ventilsitz 14 sitzt. Im geöffneten Zustand besteht ein Durchlass 30 zwischen Verschlusskörper 25 und Ventilsitz 14.

Fig. 4 zeigt ein Ausführungsbeispiel eines Mehrfachventils mit zwei nebeneinander angeordneten Ventilkammern 10a, 10b, in denen jeweils ein kugelförmiger Verschlusskörper 25a, 25b angeordnet ist. Jeder Verschlusskörper 25a, 25b dient zum Öffnen und Verschließen eines Ventilsitzes 14a, 14b. Die Ventilsitze sind an einem gemeinsamen Kolben 18 vorgesehen, die jeweils einen Ventilausgang 19a, 19b enthalten. Die Gegenwand 16 enthält zwei Zentriersitze 15a, 15b für jeweils einen der Verschlusskörper 25a, 25b. Der Kolben 18 ist mit einer Stange 31 versehen, welche durch eine Bohrung der Gegenwand 16 hindurchgeht und am Ende einen Stützflansch 32 aufweist. Die Andrückvorrichtung 26 stützt sich an der Außenseite der Gegenwand 16 und an dem Stützflansch 32 ab. Die Federvorrichtung drückt daher den Kolben 18 in Richtung auf die Gegenwand 16, wodurch die Verschlusskörper 25a, 25b in den jeweiligen Zentriersitz 15a, 15b hineingedrückt und somit auf die Achse des Ventilsitzes 14a, 14b zentriert werden. Drückt der Eingangsdruck des Ventils den Kolben 18 von der Gegenfläche 16 fort, können die Verschlusskörper 25a, 25b sich frei bewegen, so dass das Ventil mit der magnetischen Vorrichtung 22 gesteuert werden kann. Dieselbe magnetische Vorrichtung dient zum gleichzeitigen Steuern sämtlicher Verschlusskörper.

In Fig. 4 sind nur zwei Verschlusskörper 25a und 25b sichtbar. Es können weitere Verschlusskörper auf einem Kreis angeordnet sein. Hierzu sind außer den Ventileingängen 17a und 17b noch weitere Ventileingänge 17c und 17d in der Gegenwand 16 vorhanden. Jedem Ventileingang ist eine Ventilkammer mit einem Verschlusskörper zugeordnet. Die Ventilkammern können untereinander verbunden sein.

Um die Ventilsitze in korrekter Ausrichtung mit den Zentriersitzen zu halten, ist der Kolben 18 gegen Verdrehung gesichert. Hierzu weist der Flansch 27 einen Zentrierstift 33 auf, der in eine entsprechende Bohrung 34 des Kolbens 18 hineinragt, so dass der Kolben axial verschoben werden kann und gleichzeitig axial geführt wird. Das Mehrfachventil von Fig. 4 bietet den Vorteil, dass die Fluidströme der Einzelventile sich addieren, so dass ein größerer Volumenstrom geschaltet werden kann.

## Patentansprüche

1. Ventil für Fluide mit einer Ventilkammer (10), die mit einem Ventileingang (17) und einem Ventilausgang (19) verbunden ist und durch einen Ventilsitz (14) und eine Gegenwand (16) begrenzt wird, und mit einem in der Ventilkammer (10) enthaltenem bewegbaren Verschlusskörper (25) und einer magnetischen Vorrichtung (22), wobei der Ventilsitz (14) oder die Gegenwand (16) senkrecht zu der Sitzebene verschiebbar und in Richtung auf den Verschlusskörper (25) nachgiebig vorgespannt ist, derart, dass ohne äußere Krafteinwirkung der Verschlusskörper (25) sowohl den Ventilsitz (14) als auch die Gegenwand (16) berührt,
**dadurch gekennzeichnet,**
**dass** der Verschlusskörper (25) separat von der Gegenwand (16) bewegbar ist und dass der Durchmesser des Verschlusskörpers (25) deutlich kleiner ist als der Durchmesser der Ventilkammer (10), so dass der Verschlusskörper (25) sich seitlich in der Ventilkammer bewegen kann.

2. Ventil nach Anspruch 1, **dadurch gekennzeichnet, dass** die Gegenwand (16) einen Zentriersitz (15) aufweist, der den Verschlusskörper (25) abstützt.

3. Ventil nach Anspruch 2, **dadurch gekennzeichnet, dass** der Verschlusskörper (25) eine Kugel ist und der Zentriersitz (15) einen Trichter aufweist.

4. Ventil nach einem der Ansprüche 1-3, **dadurch gekennzeichnet, dass** der Ventilsitz (14) an einem Kolben (18) vorgesehen ist, der abdichtend in einem Zylinder (20) geführt ist.

5. Ventil nach einem der Ansprüche 1-4, **dadurch gekennzeichnet, dass** der Zylinder (20) einstückig mit dem Zentriersitz (15) ausgebildet ist.

6. Ventil nach einem der Ansprüche 1-5, **dadurch gekennzeichnet, dass** die Ventilkammer (10) exzentrisch zu der Achse der die Ventilkammer (10) umgebenden magnetischen Vorrichtung (22) angeordnet ist.

7. Ventil nach einem der Ansprüche 1-6 **dadurch gekennzeichnet, dass** die Ventilsitze (14a, 14b) mehrerer Ventilkammern (10a, 10b) an einem gemeinsamen bewegbaren Kolben (18) angeordnet sind.

8. Ventil nach Anspruch 7 **dadurch gekennzeichnet, dass** der Kolben (18) eine Verdrehsicherung (33, 34) aufweist.

## Claims

1. A valve for fluids, comprising a valve chamber (10) connected to a valve inlet (17) and a valve outlet (19) and delimited by a valve seat (14) and an opposing wall (16), and comprising a movable closing body (25) included in the valve chamber (10), and a magnetic device (22), the valve seat (14) or the opposing wall (16) being displaceable vertically to the seat plane and resiliently biased in the direction of the closing body (25) in such a manner that the closing body (25) contacts both the valve seat (14) and the opposing wall (16) without application of an external force,
**characterized in that**
the closing body (25) is movable separately from the opposing wall (16) and that the diameter of the closing body (25) is distinctly smaller than the diameter of the valve chamber (10) so that the closing body (25) is allowed to move laterally in the valve chamber.

2. The valve according to claim 1, **characterized in that** the opposing wall (16) comprises a centering seat (15) supporting the closing body (25).

3. The valve according to claim 2, **characterized in that** the closing body (25) is a ball and that the centering seat (15) comprises a funnel.

4. The valve according to one of claims 1-3, **characterized in that** the valve seat (14) is provided on a piston (18) guided in a cylinder (20) in a sealed manner.

5. The valve according to one of claims 1-4, **characterized in that** the cylinder (20) is formed integrally with the centering seat (15).

6. The valve according to one of claims 1-5, **characterized in that** the valve chamber (10) is arranged eccentrically to the axis of the magnetic device (22) surrounding the valve chamber (10).

7. The valve according to one of claims 1-6, **characterized in that** the valve seats (14a, 14b) of a plurality of valve chambers (10a, 10b) are arranged on a common movable piston (18).

8. The valve according to claim 7, **characterized in that** the piston (18) is provided with an anti-rotation device (33, 34).

## Revendications

1. Soupape pour fluides comprenant une chambre de soupape (10) reliée à une entrée de soupape (17) et une sortie de soupape (19) et délimitée par un siège de soupape (14) et un paroi opposé (16), et comprenant un corps de fermeture (25) déplaçable, situé dans ladite chambre de soupape (10), et un dispositif magnétique (22), ledit siège de soupape (14) ou le paroi opposé (16) étant déplaçable perpendiculairement par rapport au plan dudit siège et étant précontraint de manière souple vers ledit corps de fermeture (25), de sorte que ledit corps de fermeture (25) est en contact avec ledit siège de soupape (14) et le paroi opposé (16) sans action d'une force externe,
**caractérisée en ce que**
ledit corps de fermeture (25) est déplaçable séparément dudit paroi opposé (16) et que le diamètre dudit corps de fermeture (25) est nettement inférieur au diamètre de ladite chambre de soupape (10) de sorte que ledit corps de fermeture (25) peut se déplacer latéralement dans ladite chambre de soupape.

2. Soupape selon la revendication 1, **caractérisée en ce que** le paroi opposé (16) comprend un siège de centrage (15) supportant ledit corps de fermeture (25).

3. Soupape selon la revendication 2, **caractérisée en ce que** ledit corps de fermeture (25) est une bille et ledit siège de centrage (15) comprend une trémie.

4. Soupape selon l'une quelconque des revendications 1-3, **caractérisée en ce que** le siège de soupape (14) est prévu sur un piston (18) guidé de manière étanchéifiant dans un cylindre (20).

5. Soupape selon l'une quelconque des revendications 1-4, **caractérisée en ce que** ledit cylindre (20) est formé d'un seul tenant avec ledit siège de centrage (15).

6. Soupape selon l'une quelconque des revendications 1-5, **caractérisée en ce que** ladite chambre de soupape (10) est arrangée excentriquement par rapport à l'axe dudit dispositif magnétique (22) entourant ladite chambre de soupape (10).

7. Soupape selon l'une quelconque des revendications 1-6, **caractérisée en ce que** les sièges de soupape (14a, 14b) de plusieurs chambres de soupape (10a, 10b) sont prévus sur un piston (18) mobil commun.

8. Soupape selon la revendication 7, **caractérisée en ce que** ledit piston (18) comprend un dispositif de sécurité antirotation (33, 34).
